Europäisches Patentamt

European Patent Office

Office européen des brevets

(19)

(11) Publication number: **0 124 376**
**A2**

# (12) EUROPEAN PATENT APPLICATION

(21) Application number: **84302882.0**

(22) Date of filing: **27.04.84**

(51) Int. Ci.³: **A 01 K 3/00,** E 06 B 11/00

(30) Priority: **28.04.83 NZ 204035**

(43) Date of publication of application: **07.11.84**
**Bulletin 84/45**

(84) Designated Contracting States: **BE FR GB LU NL**

(71) Applicant: **DAIRY DEVELOPMENTS LIMITED, 43 Jans Terrace, Oakura (NZ)**

(72) Inventor: **Harvey, Donald James, Parihaka Road R.D. 35, Rahotu (NZ)**
Inventor: **Harvey, Bruce James, 43 Jans Terrace, Oakura (NZ)**

(74) Representative: **Sheard, Andrew Gregory et al, Kilburn & Strode 30, John Street, London WC1N 2DD (GB)**

(54) **A gate control.**

(57) The opening (1) between a pair of fence posts (2) is controlled by a flexible coiled wire (5) connected from one post (2) at one end to a catch (9) at the other end. A control module (13) enables the time and day to be set at which the catch (9) will automatically release the wire (5) and also operate an audible signalling means (14). Animals restrained from passing through the opening (1) by the wire (5) preferably electrified by being connected through a lead (11) to one of the electrified wires (3) of an electric fence, will become conditioned by the sounding of the horn (14) to appreciate that the gate is now open so that they can now pass through e.g. into the next pasture.

0124376

## A GATE CONTROL

This invention relates to a controlled gate the opening of which is automatically controlled at a predetermined time and associated with a stock calling means whereby the animals become conditioned to the movement required of them.

To the present time various proposals have been put forward for the controlled opening of gates or doors, see for example U.S. patent 4,364,003 (Gregory F. Phipps) and U.S. patent 4,035,702 (Pettersen et al). Also in U.S. patent 4,006,714 (Goossen) a training and crowd gate is disclosed which when operated in conjunction with an audible signal causes the desired movement of animals in front of it due to the conditioning of the animals to associate the audible signal with an electrical charge on the gate.

In an agricultural environment particularly there is, however, a need, unfulfilled to the present time by any of the previous proposals such as those hereinbefore mentioned, for an automatic gate control which can control the movement of animals within an area having one or more closable openings so that the animals can be caused to move through the openings onto new pasture or crops or for example to and from a milking shed, at a predetermined time.

It is an object of the present invention to thus provide a method of, and apparatus for, the controlling of a gate whereby at a predetermined time the movement of animals therethrough can be achieved.

According to one embodiment of the present invention there is thus provided a method of controlling the movement of animals within an area having an opening, said method comprising:

    (a)   providing a timing means having time setting means;

    (b)   setting said timing means to a predetermined time or times at which movement of the animals through the opening is required;

    (c)   providing a closure for the opening;

    (d)   providing a closure releasing means controlled by said timing means;

    (e)   providing a signalling means recognisable by the animals and arranging for the actuation thereof upon the actuation of said releasing means.

According to another embodiment of the present invention there is also provided a gate control for a closure means extendible across an opening required to

0124376

be closed, one end of said closure means adapted to be secured at one side of said opening and an opposite end of said closure means adapted to be releasably secured to an opposite side of said opening, said gate control comprising:

(a) a catch means adapted to engage with said other end of said closure means;

(b) a catch releasing means controlled by a timing means settable to a predetermined time or times to cause the operation of said catch releasing means at said time or times;

(c) a signalling means recognisable by animals actuable upon the actuation of said catch releasing means.

The present invention will now be described by way of example and with reference to the accompanying drawings wherein;

FIGURE 1 : shows diagramatically a controlled gate according to one embodiment of the invention;

FIGURE 1A : shows diagramatically part of the gate opening mechanism of Figure 1;

FIGURE 2 : shows, in block diagram form, the gate control unit of Figure 1;

FIGURE 3 : shows a diagram of one control circuit suitable for use in Figure 2.

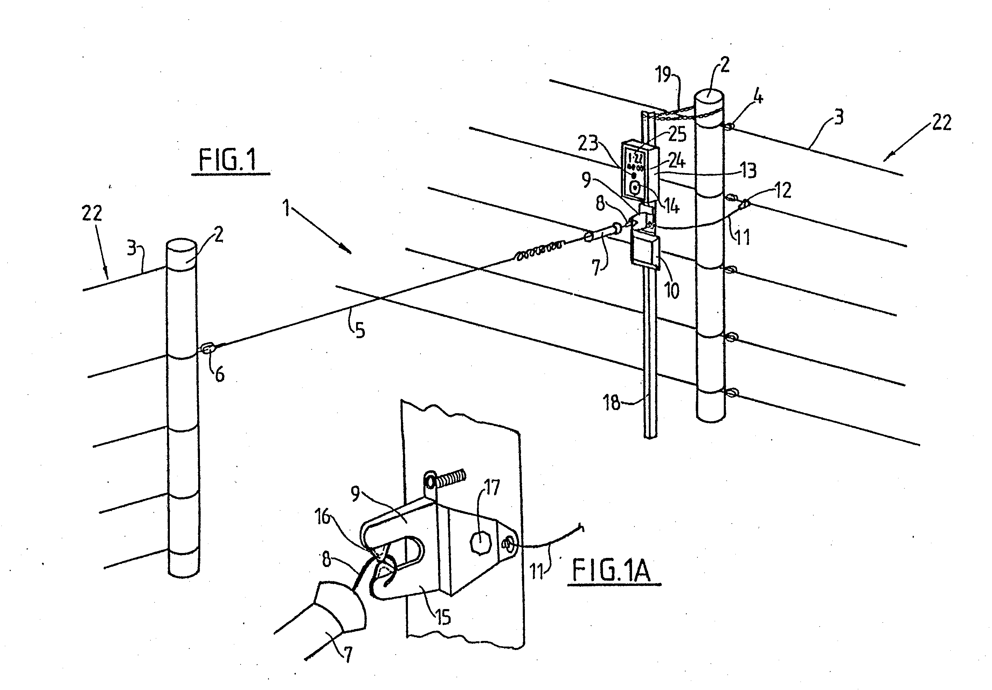

Referring to Figures 1 and 1A of the accompanying drawings an opening 1 is shown defined between posts 2 on which fences 22 are mounted. In the embodiment shown the fences 2 are energised with a number of spaced apart electrified fence wires 3 extending through insulators 4.

The opening 1 in Figure 1 is shown closed by means of a single wire, cable or the like 5 extending thereacross. In the embodiments shown the wire 5 is extensible in the form of a plurality of coils. Other forms of closures or gates could of course be used if desired. At one end the wire 5, which if energised is bared, is mounted by means of insulator 6 on a fence post 2 and at its other end has a hooked portion 8 engagable by the locking members 16 of catch 9. The catch 9 in this embodiment is of metal enabling the wire 5 to be electrified through an electrical lead 11 connected by connector 12 with one of the energised fence wires 3. The catch 9 is mounted on but electrically insulated from a support post 18 by means of bolts 17. An electrically insulating cover 7 is shown provided adjacent the end 8 of the wire 5 so that manual release of the wire 5 from the catch 9 can be effected if required without necessitating the switching off of the power to the electric fence 22.

A battery 10 is shown mounted on the support post 18. This may include one or more solar cells. The battery 10 is connected with a control module 13. The control module 13 includes a clock module 25 and time and trip set control 24 and day select control 23. An animal signalling means 14 is provided either integral with the control module 13 as shown or possibly alternatively provided as a separate unit. Suitably the signalling means 14 will comprise a horn but it is envisaged that with certain animals one or more different types of signalling means may be utilised providing for example high frequency signals which are not audible to the human ear and/or visual signals. A support chain or rope is shown connected between the top of the support post 18 and the fence post 2.

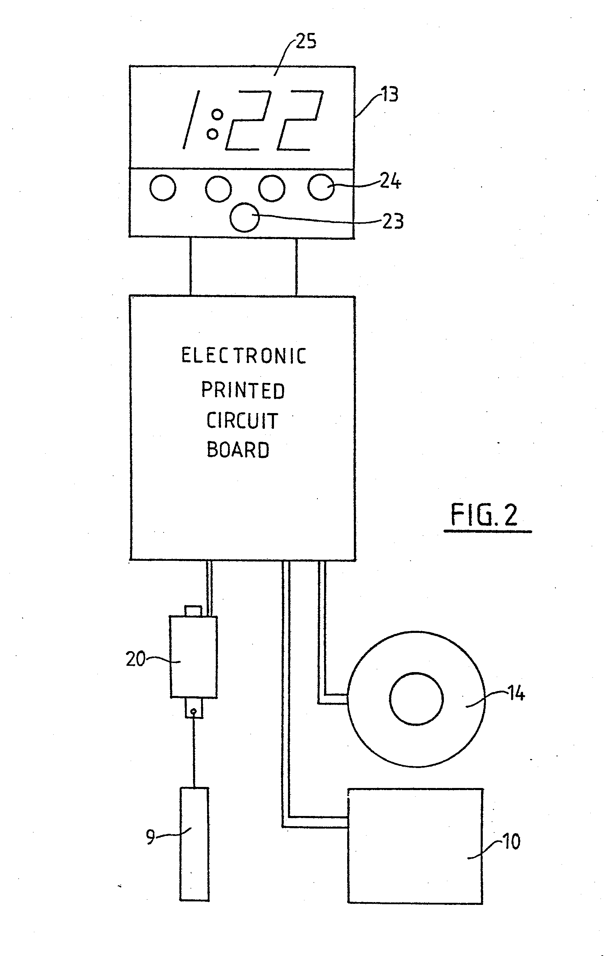

Referring to Figure 2, when the actual time and the set time coincide the output of the clock module 25 changes state. Assuming the day set by the day control knob 23 also coincides then a release solenoid 20 will be energised which will operate the locking members of the catch 9 releasing the hook shaped end 8 of the fence closure 5. The natural resilience of the closure 5 provided in the example shown by its coiled shape will result in closure 5 retracting so as to lie adjacent the opposite fence post 2 thus providing no obstruction to the animals passing through the opening 1. The sounding of the audible alarm 14 has in experimentation found to produce after a relatively short time a recognition by the animals that they can now pass through the opening 1 to the next pasture, milking shed or the like.

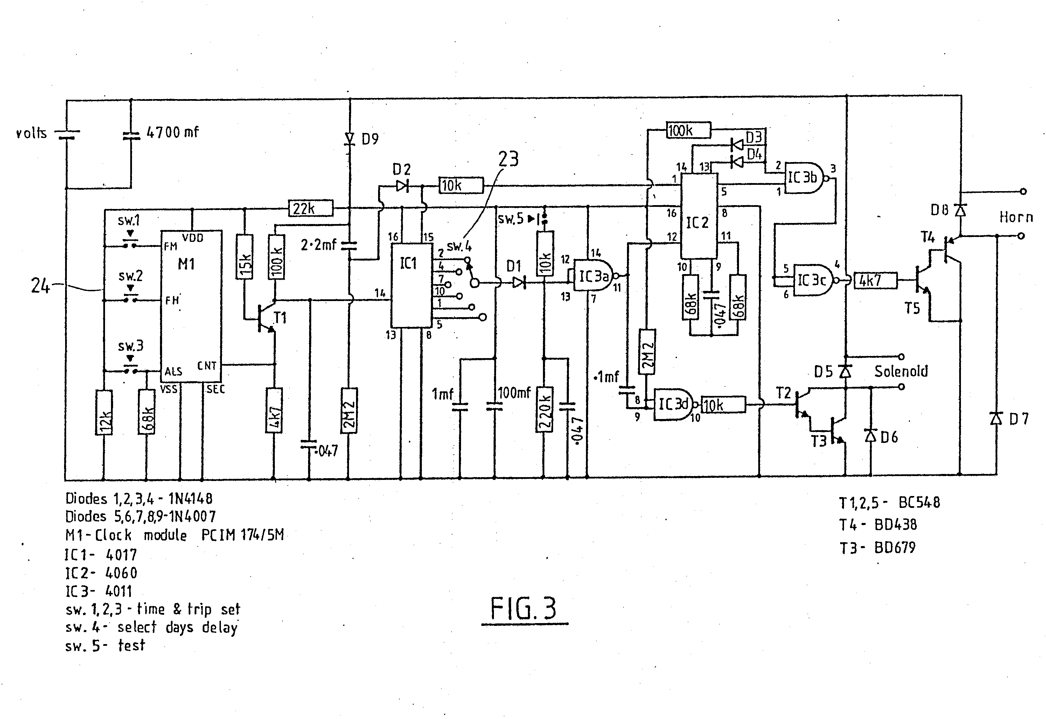

Turning now to Figure 3 of the accompanying drawings the electronic circuit shown in block diagram form in Figure 2 is shown in greater detail.

A clock module M1 is associated with time and trip set control switches 24. When the time set corresponds with the actual time the clock module M1 changes state and a signal is passed through a level transfer transistor T1 to a decade counter IC1. The output of the decade counter is selected by a day select switch SW4 which determines the day for release of the closure.

The output from the decade counter IC1 provides, through IC3a and IC3d a short pulse to an amplifier comprising transistors T2 and T3 to operate the release solenoid (20). This pulse also starts an audio oscillator IC2 the frequency of which is controlled by the RC circuit connected across pins 9, 10 and 11 of IC2. The oscillator signal is selected by IC3b to provide required "on time" for the horn (14) the output of IC3b being inverted by IC3c to drive amplifier T4, T5 connected to the horn (14). After a fixed time determined by IC2 a reset pulse from pin 1 of IC2 resets the decade counter IC1 through pin 15.

A test switch SW5 can be operated to test the circuit.

Diode D2 automatically resets the decade counter IC1 when a new battery is inserted. Diode D9 is used to isolate the timing section of the circuit from pulses from the solenoid and horn circuits.

The controls 24 will therefore be used to set the time for the required gate opening and to set the actual time, the times being displayed on a liquid crystal display or the like 25. The rotary switch control 23 will be used to set the required day of release. It is envisaged that a selection of days could enable a number, for example 10, of consecutive days to be selected during which the gate releasing means will be activated at the preset time or times.

A gate reel-in (not shown) could it is envisaged also be provided so as to reel in the wire or wires 5

0124376

once released. The reel-in mechanism could for example switch on at a tension of the wire or wires 5 below 3kg and switch off at a tension above 5kg. The animals rapidly come to associate the opening of the closure 5 with the operation of the animal signalling means so that an effective control of movement of animals through fence or gate openings can be achieved.

Although this invention has been described by way of example and with reference to possible embodiments thereof it is to be understood that modifications or improvements may be made thereto without departing from the scope of the invention as defined in the appended claims.

CLAIMS:

1.    A method of controlling the movement of animals within an area having an opening, said method comprising:

    (a)   providing a timing means having time setting means;

    (b)   setting said timing means to a predetermined time or times at which movement of the animals through the opening is required;

    (c)   providing a closure for the opening;

    (d)   providing a closure releasing means controlled by said timing means;

    (e)   providing a signalling means recognisable by the animals and arranging for the actuation thereof upon the actuation of said releasing means.

2.    A gate control for a closure means extendible across an opening required to be closed, one end of said closure means adapted to be secured at one side of said opening and an opposite end of said closure means adapted to be releasably secured to an opposite side of said opening, said gate control comprising:

(a) a catch means adapted to engage with said other end of said closure means;

(b) 'a catch releasing means controlled by a timing means settable to a predetermined time or times to cause the operation of said catch releasing at said time or times;

(c) a signalling means recognisable by animals actuable upon the actuation of said catch releasing means.

3.  A controlled gate having a gate control as claimed in claim 2 wherein the closure means comprises at least one extensible wire which can be extended across the opening and said releasing means comprises a catch having openable locking members which in their closed position are adapted to engage with and hold the other end of said closure means.

4.  A controlled gate having a gate control as claimed in claim 3 wherein the at least one wire is coiled, and adapted to be energised, the catch being electrically conductive to form part of an electrical circuit with said at least one wire.

5.    A controlled gate having a gate control as claimed in claim 2 wherein said timing means includes day and time setting means so that on a selected day when the actual time and the selected time coincide the catch releasing means and the animal signalling means are operated.

6.    A controlled gate having a gate control as claimed in claim 2 wherein the animal signalling means comprises a horn and said horn is connected to an oscillating means controlling the frequency of operation of the horn.

FIG.1

FIG.1A

0124376

FIG. 2

ELECTRONIC PRINTED CIRCUIT BOARD

FIG.3

Diodes 1,2,3,4 - 1N4148
Diodes 5,6,7,8,9 - 1N4007
M1 - Clock module  PCIM 174/5M
IC1 - 4017
IC2 - 4060
IC3 - 4011
sw. 1,2,3 - time & trip set
sw. 4 - select days delay
sw. 5 - test

T1,2,5 -  BC548
T4 - BD438
T3 - BD679